# EUROPEAN PATENT APPLICATION

(11) **EP 4 296 073 A1**
(43) Date of publication of application: **27.12.2023**
(21) Application number: 22180867.8
(22) Date of filing: 24.06.2022
(51) Int. Cl.: B60B 21/12, F16F 15/32, F16F 15/34

(54) **BALANCING WEIGHT FOR WHEELS**

(71) Applicant: Wheel Balance ApS, 4800 Nykøbing F (DK)
(72) Inventor: LARSEN, Søren Holm, 4800 Nykøbing F (DK)
(74) Representative: Dragsted Partners A/S

(57) **Abstract**

A balancing assembly for wheels, comprising: a support member extending in a direction having a first longitudinal axis and a height extending along a first radial axis, the support member comprising: a first surface being configured to be attached to a surface area of a rim of a wheel, a second surface, an intermediate portion extending in a direction parallel to the radial axis, extending from the first surface to the second surface, a first locking member, the assembly further comprising a load member body extending in a direction having a second longitudinal axis, the load member comprising: a primary surface, a first connecting part positioned on a first side of the second longitudinal axis, a second connecting part positioned on a second side of the second longitudinal axis, where the first and the second connecting part are configured to engage with the intermediate portion of the support member securing the load member in a radial direction, a second locking member, configured to engage with the first locking member, to secure the load member relative to the support member in a longitudinal direction.

## Description

### Technical field

A balancing assembly for wheels comprising: a support member extending in a direction having a first longitudinal axis and a height extending along a first radial axis, the support member comprising: a first surface being configured to be attached to a surface area of a rim of a wheel.

### Description

A wheel for a car is an essential part of an automobile, the wheel traditionally being the only part of the automobile that comes into contact with the surface of the road, and the wheel being the part of the car where the torque of an engine or motor is converted into forwards or backwards motion of the automobile, and where breaking force is converted into a negative acceleration of the automobile.

There are a number of types of wheels used on an automobile, but a common assembly for a wheel is in the form of a metallic rim and a rubber tire joined together to create an effective wheel for a car. However, due to the fact that the wheel of the car rotates at high speeds, in that a car wheel can be designed to be capable of allowing the automobile to travel at speeds in excess of 300 km/h, there may be asymmetries in mass distribution of the wheel, which can cause ride disturbances, usually as vertical and lateral vibrations.

To solve this problem, wheels have been provided with weights that are positioned at strategically favourable positions around the rim, which may counteract the combined unbalance of the rim and the wheel. Traditionally weights may be clamped to a protruding part of the rim, i.e. on the inner side of the rim, or in the case of expensive wheels, the weights may be adhered to the inner surface of the rim to provide balance to the wheel assembly. However, the use of clamping weights may damage the surface coating of a wheel, which means that the application of the weight may cause a scratch in the surface, which reduces the value of the rim. Furthermore, the provision of an adhered weight on the inner surface of the wheel means that when a tire is changed, the wheel assembly needs to be re-balanced, and the adhered weight has to be removed, and a second weight may have to be positioned in a different position on the wheel. This may leave adhesive residue on the wheel and may cause the weight to be discarded due to having been damaged during removal, which means that it cannot be reused.

Known versions of systems having integrated systems for providing balance to rims and wheels have been provided where a groove or a rib has been provided along the circumference of a rim, where the groove and/or the rib are integrated into the structure construction of the rim, e.g. as shown in US 3,799,618. However, the weight used for these systems has to be tightened to the groove and/or the rib using a screw, bolt or other types of fastening elements. Furthermore, the weights tend to be rigid elements, which requires that the groove and/or the rim have to be provided with insertion areas allowing the weight to be connected with the groove and/or rim. Such an insertion area is often in the form of a part of the groove or the rim, where material has been removed from the groove or rim, or the groove or rim are expanded or constricted, allowing the weight to be inserted. This asymmetry of the groove and/or the rim may cause an imbalance in the rim, so that the weight has to counteract this asymmetry as well.

Furthermore, the balancing of wheels is considered as being a specialist job, which requires specialist tools and is normally not considered as being achievable by any other people than specialists.

Thus, there is a need for a simpler way of balancing a wheel assembly, where the equipment used for balancing the wheel may be re-used, thereby reducing the waste in the process of balancing wheels.

In accordance with the present disclosure, a balancing assembly for wheels is provided, comprising: a support member extending in a direction having a first longitudinal axis and a height extending along a first radial axis, the support member comprising: a first surface being configured to be attached to a surface area of a rim of a wheel, a second surface, an intermediate portion extending in a direction parallel to the radial axis and extending from the first surface to the second surface, a first locking member, the assembly further comprising a load member body extending in a direction having a second longitudinal axis, the load member comprising: a primary surface, a first connecting part positioned on a first side of the second longitudinal axis, a second connecting part positioned on a second side of the second longitudinal axis, where the first and the second connecting part are configured to engage with the intermediate portion of the support member securing the load member in a radial direction, a second locking member, configured to engage with the first locking member to secure the load member relative to the support member in a longitudinal direction.

Within the understanding of the present invention, the term longitudinal direction may be understood as the direction that extends along the length of the support member and/or the load member. The longitudinal axis may extend in along the longitudinal direction. Within the understanding of the term in relation to a wheel, the longitudinal direction may be understood as a direction that follows the rotation of the wheel and/or the rim, where the longitudinal axis may be along the circumference of the rim and/or the wheel. The longitudinal axis may be utilised to define the length of the load member and/or the support member.

Within the understanding of the present invention, the term radial direction may be understood as the direction that extends in a direction away from the longitudinal axis, in the direction of a radii of the wheel. Thus, if the longitudinal axis may be seen as the circumference of a circle (of the wheel or the rim), the radial direction may extend in a direction towards and/or away from the centre of the circle, thus the radial axis may intersect the longitudinal axis. The radial axis may be utilised to define the height of the load member and/or the support member.

Within the understanding of the present invention, the term transverse direction may be understood as the direction that extends in a direction away from the longitudinal axis, where the transverse axis may be perpendicular to the longitudinal axis and/or the radial axis. The transverse axis may be utilised to define the width of the load member and/or the support member.

By providing a system as disclosed above, it is possible to provide a balancing assembly for wheels that can easily be mounted on a rim of a wheel, where the support member may be attached to an outer surface of the rim, and where the load member may be added to the support member subsequently. The provision of the first and/or the second connecting part that engage the intermediate section of the support member ensures that the load member cannot be manoeuvred in the radial direction, as well as the transverse direction. Thus the connecting parts, along with the load member body, may be utilised to fix the load member in two directions, ensuring that the load member body does not release from the support member.

Furthermore, the provision of the first locking member on the support member and the second locking member on the load member body may be utilised to ensure that the load member is secured in the longitudinal direction. Thus, when torque is applied to the rim and/or the wheel, the first and second locking members ensure that the load member is fixed relative to the support member and/or the surface of the rim in a longitudinal direction and that the torque is transferred directly to the load member, ensuring that the load member rotates in together with the rim and the support member.

Thus, the provision of the first locking member and the second locking member engaging each other ensures that when the load member is applied to the support member, the load member is secured in any direction relative to the support member, and the load member body is securely fastened relative to the support member, and as the support member is configured to be securely fastened relative to the rim, the load member body is secured relative to the rim.

The interaction between the first locking member and the second locking member means that if there is a change in the balance of the wheel, i.e. by replacing a tire, the load member may be removed from its position relative to the support member and may be reattached in a different position, should the balance have altered with the new tire, or where a lighter and/or heavier load member body may be attached to the support member in the same position and/or a different position.

Thus, the load member body may be temporarily attached to the support member, where it can easily be removed or replaced without any damage to the rim and/or the wheel.

Thus, by providing a system where the load member body may easily be attached and removed from the support member, it may be relatively easy for non-specialists to provide wheel balancing by trial and error or without the use of specialist tools. Thus, a potential change of the balance of a wheel means that the temporary load member body may be removed, and the wheel may be re-balanced by replacing the previous load member body and/or by repositioned the load member body on the circumference of the rim.

In one exemplary embodiment, the first locking member may comprise a first physical structure, and where the second locking member may comprise a second physical structure, where the first physical structure may cooperate with the second physical structure. The first physical structure and the second physical structure may be of the kind where the physical structures mate with each other in the form of a plug and socket, or where the first physical structure is the inverse of the second physical structure. As an example, the first physical structure may be a protrusion where the second physical structure is a groove, where the inner dimensions of the groove may match the outer dimensions of the protrusion. Thus, the first physical structure may have an outer structure that matches an inner structure of the second physical structure or vice versa.

In one exemplary embodiment, the first locking member may comprise a first projection, where the second locking member may comprise a first depression, and where the first projection cooperates with the first depression, or wherein the first locking member may comprise a first depression, and where the second locking member may comprise a first projection, where the first projection cooperates with the first depression. This means that when the load member body is attached to the support member, and the first locking member is aligned with the second locking member, the second locking member will engage the first locking member, thereby ensuring that the load member body cannot slide relative to the support member in the longitudinal direction, along the first and/or second longitudinal axis. The first locking member may extend in a radial direction, and the second locking member may be shaped in the inverse shape of the first locking member, so that when the first locking member is aligned correctly, the first locking member and the second locking member will mate and cooperate to prevent the movement in the longitudinal direction.

In one exemplary embodiment, the first locking member may be positioned on the second surface of the support member, and the second locking member may be positioned on the primary surface of the load member. The second surface of the support member may have a normal that is parallel to the radial axis of the support member, where the second surface may face away from the outer surface of the rim. The primary surface of the load member body may be configured to face the second surface of the support member. Thus, when the load member body and the support member are cooperating, the primary surface of the load member may face the second surface of the support member. Yet further, the primary surface of the load member may be arranged in such a manner that the primary surface abuts the second surface. Thus, the primary surface of the load member may face a direction that is opposite to the direction of the second surface of the support member.

In one exemplary embodiment, the primary surface may be positioned in a region that extends from the first connecting part to the second connecting part. Thus, the load member body extends from a first connecting part towards a second connecting part, where the primary surface is positioned in an intermediate position along the length of the load member body. The first connecting part and the second connecting part may face the primary surface of the load member body. The load connecting member may have a shape of a U beam, in a cross-sectional view taken along the longitudinal axis where the connecting parts extend inwards from the flange of the U beam, where the connecting parts ensure a radial stability/fixation relative to the support member, and where the side flanges provide a transverse stability/fixation relative to the support member.

In one exemplary embodiment, the support member may comprise a plurality of first locking members, and the load member may comprise a plurality of second locking members, where the plurality of first locking members may be configured to mate with the plurality of second locking members. Thus, the support member may be provided with a plurality of first locking members where the first locking members extend along the longitudinal axis of the support member. In one embodiment, the support member may comprise first locking members that extend along the entire length of the support member.

The load member body may have a length that is shorter than the support member, where the load member comprises a plurality of second locking members. The second locking members may be positioned in such a way that at least two second locking members may be configured to mate with at least two first locking members. The second locking members may be positioned in such a way that at least three second locking members may be configured to mate with at least three first locking members. This may be repeated for four, five or further numbers of first and second locking members. However, the support member may be provided with a number of first locking members that is significantly larger than the number of second locking members of the load member body. However, the support member comprises an equal number of first locking members as the load member body, when taken along the same length. Thus, a 5 cm portion of a support member has the same amount of first locking members as a 5 cm portion of a load member body has second locking members. Thus, the area where the load member body overlaps the support member may have the same amount of first locking members and second locking members.

In one exemplary embodiment, the width of the load member may be larger than the width of the support member in a direction along a transverse axis, or wherein the width of the support member may be larger than the width of the load member in a direction along a transverse axis. This means that the load member may extend beyond the peripheral edge of the support member, so that the connecting members can interact with the intermediate portion from a transverse side of the support member in a direction towards the first and/or the second longitudinal axis. Alternatively, the situation may be vice versa, where the support member may have a width that is larger than the width of the load member body, so that the connecting parts of the load member body can interact with the intermediate portion of the support member in a transverse direction away from the first and/or the second longitudinal axis.

In one exemplary embodiment, the intermediate portion may comprise a first groove positioned on one side of the first longitudinal axis and a second groove positioned on an opposite side of the first longitudinal axis. In one example, the support member may have an H-shape seen in a cross-section along the longitudinal axis, where the first groove and the second groove are positioned between the flanges of the H shape. Thus, the connecting portions of the load member body may enter the region defined by the flanges, and where the connecting portion may provide a counterforce to the flange to prevent the load member body from being manoeuvred in a radial direction.

In one exemplary embodiment, the load member body may comprise a gripping member extending in a direction away from the load member body allowing a gripping force to be applied to the load member body for attachment and/or release of the load member body relative to the support member. The gripping member may have a shape which allows a user to grip the gripping member using the fingers of the hand, thereby using the fingers of the hand to position the load member body relative to the support member. The gripping member may be used to click the load member body into its position on the support member.

In one exemplary embodiment, the load member body and/or the support member body may be configured to resiliently flex in a transverse direction. Thus, the load member body and/or the support member body may be constructed out of a resilient material, where the resilient material has a shape memory in its first state. By providing a bending force to the load member body and/or the support member body, the shape of the part may transform to a second state, so that the bent part can be arranged on the opposing part. Thus, when the load member body or the support member body are in their first states, the load member body or the support member body have a shape that embraces the opposing part (support member body or the load member body), while in its second state, the bent part has a shape that allows it to be slid onto the opposing part. This may allow the load member to be snapped to the support member, the shape memory of the member ensuring that the part is fixed relative to the opposing member. However, by application of a bending force, the bent part can be removed relative to the opposing part or arranged onto the opposing part.

In one exemplary embodiment, the first connecting member and/or the second connecting members may be provided with a flange portion configured to interact with a mating groove portion on the intermediate portion of the support member. The flange part may extend in a transverse direction inwards in a direction towards the second longitudinal axis and may enter the groove from the side of the supporting portion in a transverse direction towards the second longitudinal axis. The flange portion may thereby be utilised to fix the load member body relative to the support member in a radial direction, as the flange portion prevents the load member body from moving in a radial direction away from the support member. A part of the flange portion may be parallel to the primary surface of the load member body, so that a part of the support member may be enclosed at least partly by the primary surface and the flange portions. The load member body may be provided with a pair of opposing flange portions, where each flange portion is intended to be inserted into a pair of opposing groove portions.

In one exemplary embodiment, the second surface of the support member faces away from the surface area of the rim (opposite to the first surface), where the primary surface of the load member may be configured to face the second surface. The second surface of the support member may have a normal that is parallel to the radial axis of the support member, where the second surface may face away from the outer surface of the rim. The primary surface of the load member body may be configured to face the second surface of the support member. Thus, when the load member body and the support member are cooperating, the primary surface of the load member may face the second surface of the support member. Yet further, the primary surface of the load member may be arranged in such a manner that the primary surface abuts the second surface. Thus, the primary surface of the load member may face a direction that is opposite to the direction of the second surface of the support member. The first surface of the support member may abut the outer surface of the rim, where the second surface is positioned on the opposite side of the support member.

In one exemplary embodiment, the first locking member may be positioned on the second surface of the support member, and the second locking member may be positioned on the primary surface of the load member. Thus, by positioning the primary surface of the locking member body onto the second surface of the support member, the first locking member may interact with the second locking member. The first locking member and the second locking member may extend in a radial direction, e.g. in the form of a protrusion and a matching depression, where the first connecting member and the second connecting member ensure that the load member body is immovable in a radial direction relative to the support member. Thus, as the first and second locking members extend in the radial direction, the cooperation of the locking members ensures that the load member body cannot be moved in a longitudinal direction relative to the support member, as the outside of the protrusion prevents the inside of the depression to be moved or vice versa. Thus, the inner wall of the first locking member or the second locking member may be parallel to the outer wall of the first locking member or the second locking member, where the inner wall and the outer wall extend at least partly in a radial direction.

In one exemplary embodiment, the support member may be configured to extend along the full circumference of the rim. By providing the support member along the full circumference of the rim, it is possible to position the load member body in any angular position along the circumference of the rim. This means that the load member may be positioned in a region along the circumference where the balance of the wheel may be symmetric. Furthermore, should the balance of the wheel change, it may be possible to reposition the load member in a different angular position (position along the circumference) to counteract the imbalance.

In one exemplary embodiment, the first connecting part and/or the second connecting part may be configured to provide a force in a radial direction and providing an engagement force in the radial direction between the first locking member and the second locking member. The first connecting part and the second connecting part may be positioned in a position along the radial axis of the load member body that is different from the second locking member. In one example, the first connecting part and the second connecting part may be configured to engage a surface of the support member that is on an opposite side of a surface having the first connecting member. Thus, the first connecting part and the second connecting part may be configured to squeeze or force the second locking part onto the first connecting part in a radial direction towards the first locking part. Thus, the first connecting part and the second connecting part may be configured to provide a force to the second locking member in a radial direction onto or towards the first locking member.

In one exemplary embodiment, the first locking member and the second locking member have a stationary physical shape. The first and the second locking member are configured to have a predefined unchangeable shape. This means that the height, size, width and other dimension of the first and second locking parts are configured to be constant during the use of the balancing assembly. Thus, the stationary physical shape ensures that it is not needed to change the shape of the locking members after positioning the load member body in its correct position. Thus, the locking members cannot be seen as having a varying size, similar to a screw or a bolt that may be rotated to an extended position fix a weight in position.

In one exemplary embodiment, a plurality of first locking members may be distributed along the first longitudinal axis in a first pattern, where the plurality of second locking members may be distributed along the second longitudinal axis in a second pattern, where the second pattern matches the first pattern. The pattern may be any suitable pattern, such as a row of first locking members extending along the first longitudinal axis, where the second locking members will be distributed along the same pattern along the second longitudinal axis. Thus, if there are two first locking members extending along a line on the support member, the load member body will have second locking members that match the same pattern, so that the two second locking members interact, cooperate and/or mate with the two first locking members. The same may be stated should further locking members be distributed along the pattern. However, the length of the load member body limits the number of locking members, so that if the support member is 50 cm long, while the load member body is 3 cm long, the pattern is matched in the area that is overlapped when the load member body is arranged on the support member.

### Brief description of the drawings

The following is an explanation of exemplary embodiments with reference to the drawings, in which:
Fig. 1 is a perspective view of a load member in accordance with the present disclosure,
Fig. 2 is a perspective view of a part of a support member in accordance with the present disclosure,
Fig. 3 is a perspective view of a support member in accordance with the present disclosure,
Fig. 4 is a perspective view of a wheel balancing assembly attached to a wheel,
Fig. 5 is a different perspective view of a wheel balancing assembly attached to a wheel,
Fig. 6 is a side cross-sectional view of a wheel balancing assembly, and
Fig. 7A-7C is a cross-sectional view of the process of attaching a load member body to a support member.

### Detailed description

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the disclosure or as a limitation on the scope of the disclosure. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

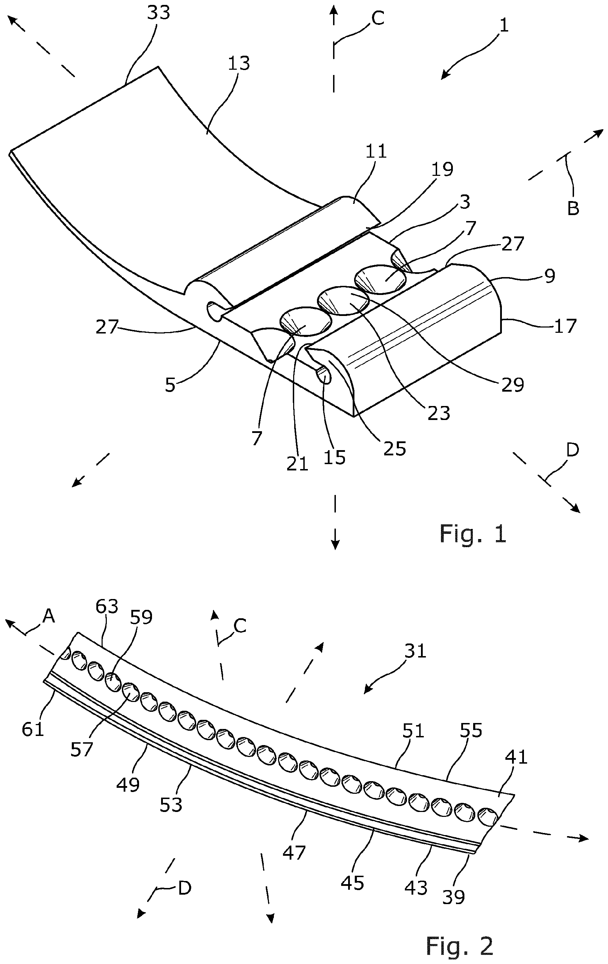

Fig. 1 shows a perspective view of a load member 1, having a load member body 3, where the load member body has a length extending along a second longitudinal axis B, a width extending along a transverse axis D and a height extending along a radial axis C.

The load member body 3 comprises a primary surface 5, where the primary surface comprises a plurality of second locking members 7, as well as a first connecting member 9 and a second connecting member 11. The load member body further comprises a gripping member 13, where the gripping member extends in a direction away from the body 3 in a transverse direction along the transverse axis D. The locking members 7 are positioned adjacent to each other in a direction that is parallel to the second longitudinal axis B and extend from a first end part 15 of the load member body towards the second end part 17 of the load member body. The second locking members 7 are in this embodiment shown as being conic depressions, having an inner wall 29 that tapers in a radial direction C.

The connecting members 9 and 11 are positioned on each side of the second longitudinal axis B on a transverse side of the longitudinal axis, where the first connector end part 19 faces the second connector end part 121, and where the opposite ends of the first connector part 9 and the second connector part 11 are attached to the load member body 3. The first connector part 9 and the second connector parts 11 are provided with a depression 23, which may extend parallel to the longitudinal axis, where the depression 23 provides a weakening on an inner side 25 of the connecting parts 9, 11, allowing the first connector end part 19 and the second connector end part 21 to deflect relative to the load member body 3 and/or the primary surface 5. The first connector end part 19 and the second connector end parts 21 may also have a thickness which tapers in a direction towards the second longitudinal axis B, allowing the tip parts 27 to deflect relative to the load member body 3, when a force is applied to the load member body and where the first connector end part 19 and the second connector end parts 21 are in contact with a second entity, such as the support member 31 shown in Fig. 2.

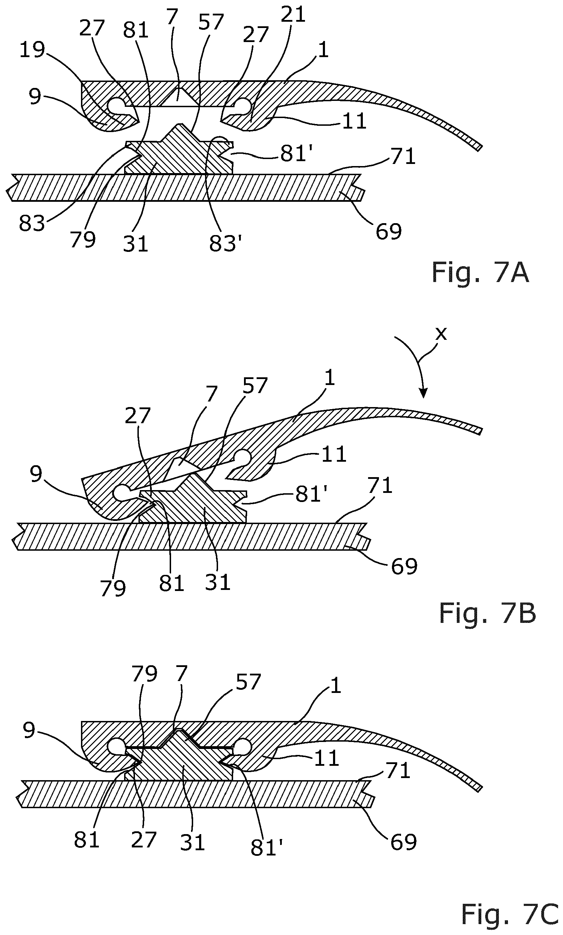

The load member 1 further comprises a gripping member 13, where the gripping member is dimensioned to be gripped by the fingers of the hand, and where the user can hold and apply the load member 1 to the support member, where the application/attachment process is shown in Fig. 7A-7C. The gripping member may comprise a gripping end part 33, and an opposed end 35, where the opposed end part 35 is attached to a transverse side 37 of the load member body 3.

Fig. 2 shows at least a part of a support member 31, where the support member has a length extending along a first longitudinal axis A and has a width extending along a transverse axis D and has a height extending along a radial axis C. The support member 31 has a first surface 39 and a second surface 41, where the first surface 39 is configured to face the surface of a rim (not shown), and the second surface 41 faces away from the rim in a radial direction C. The first surface may 39 be arranged on a first elongated part 43, and the second surface may be arranged on a second elongated part 45, where the first elongated part 43 and the second elongated parts are connected to each other in a central area. The first elongated part 43 and the second elongated part 45 are separated by an intermediate portion 47, which is positioned on the first transverse side 49 and the second transverse side 51, where the intermediate portion may be in the form of a first groove 53 and a second groove 55 positioned on opposite transverse sides of the support member 31. The grooves 53, 55 are configured and dimensioned to receive the first connector part 9 and the second connector part 11, when the load member 1 of Fig. 1 is positioned on the support member.

The support member 31 further comprises a plurality of first locking members 57 extending in a direction parallel to the first longitudinal axis A, and where the first locking members are in the form of conic protrusions extending in a radial direction C, where the outer wall 59 of the first locking members 57 tapers in the radial direction C, where the base part 61 of the first locking member 57 has a size that is larger than the tip part 63 of the first locking member 57. The shape of the outer wall 59 of the first locking member 57 matches the shape of the inner wall 29 of the second locking member 7 of the load member 1. Thus, when the load member is positioned on the support member, the first locking members 57 extend into the second locking member 7 and prevent the load member from moving relative to the support member in a direction along the first longitudinal axis A or the second longitudinal axis B. Thus, if the load member 1 comprises three second locking members 7, the three second locking members will interact with three first locking members 57 of the support member 31.

It is to be understood that the number of first locking members and second locking members may be anywhere from one to a plurality of locking members, and it is to be understood that the support member must have at least one locking member, and the load member must have at least one locking member. The number of locking members shown in the embodiments are only an example of one embodiment, and the person skilled in the art would easily be able to alter the number of locking members on the support member and the load member.

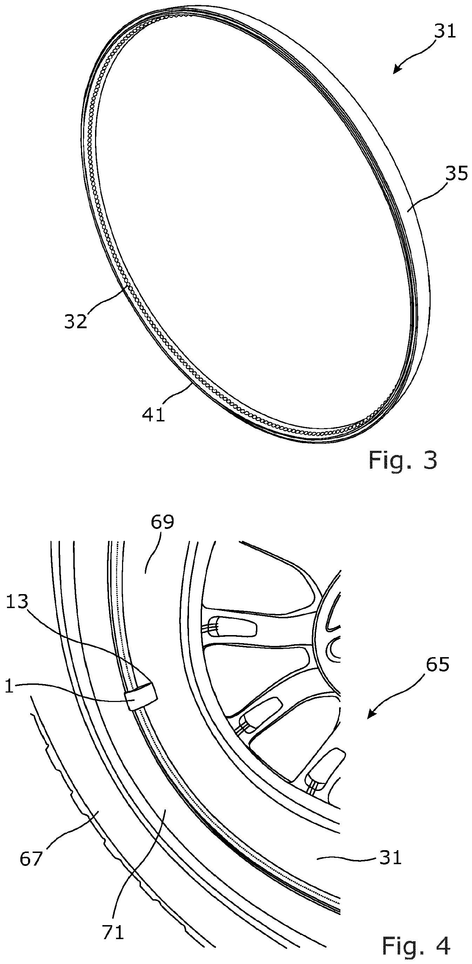

Fig. 3 shows an example of a complete support member 31 (as shown in Fig. 2), where the support member 31 extends in a circle, where the support member may be capable of extending along an entire circumference of an inner surface of a rim (not shown) of a wheel (not shown). The first surface 39 is configured to face the outer surface of the rim, while the second surface 41 is configured to face in a direction away from the rim, and/or face in the same direction as the outer surface of the rim, to which the support member 31 is attached to. As may be seen, the support member 31 is provided with a number of first locking members 37 that extend along the entire length of the support member 31.

Fig. 4 shows a wheel 65, having a tire 67 and a rim 69. The rim 69 has an inner surface 71, where the inner surface faces the wheel hub of a car, where the inner surface 71 is the back side of the rim and faces inwards towards a central axis of a car. The support member 31 has been attached to the inner surface 71, along the circumference of the inner surface 71, ensuring that the support member extends along the entire circumference of the rim. The load member 1 is attached with the support member 31 in a position where the weight of the load member balances the asymmetry of the wheel and ensures that the wheel 65 can rotate without vibration during the operation of the wheel. If the balance of the wheel 65 changes, the load member 1 may be removed from its position by gripping the gripping member 13 and repositioned at a different angular position to re-balance the wheel or may be replaced by a different load member having a different weight.

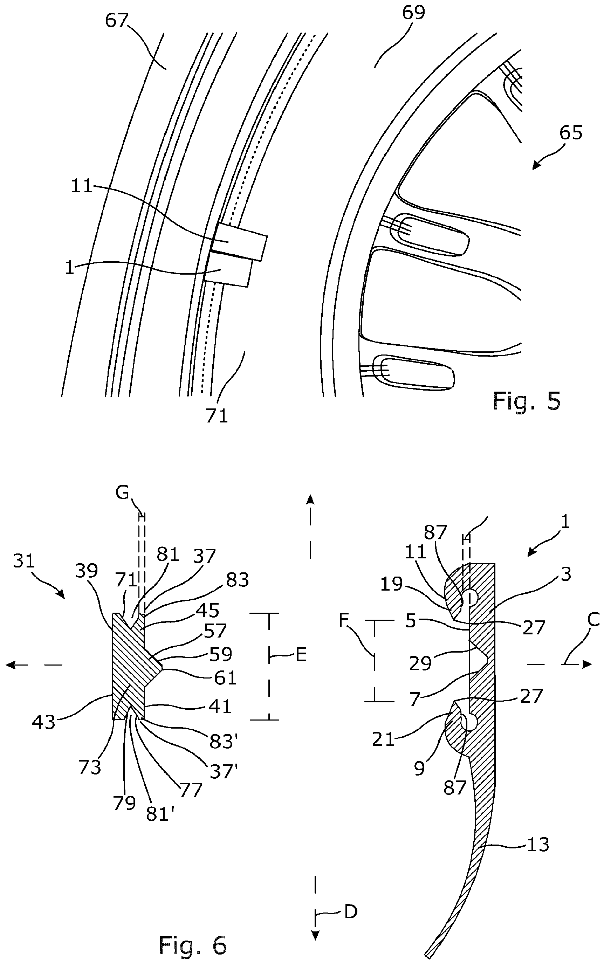

Fig. 5 shows a similar view as seen in Fig. 4, where the support member 31 is attached to the inner surface 71 of the rim 69. In this example, the wheel balance assembly is provided with a first load member 1 and a second load member 1' positioned in an abutting position relative to the first load member 1. Thus, the load members may be positioned in any suitable position, ensuring that the load member provides a correct weight in the correct position to balance the wheel 65.

Fig. 6 is a side schematical view of the wheel balancing assembly, having a support member 31 and a load member 1, where the figure shows a cross-sectional view taken along the transverse axis D, across the first longitudinal axis A and the second longitudinal axis B.

The support member 31 comprises a first elongated part 43 and second elongated part 45 where the first elongated part 43 is connected to the second elongated part 45 via a central part 73, where the central part 73 coextends with the first elongated part 43 and the second elongated part along the length of the support member 31. The first elongated part 43 has a first surface 39 and an opposing first groove surface 75, which faces the opposite direction from the first surface 39. The second elongated part 45 comprises a second surface 41 and an opposing second groove surface 77, which faces the opposite direction from the second surface. The first groove surface 75 and the second groove surface 77 may connect with each other at a joining 79, where the first groove surface 75 and the second groove surface 77 define a groove 81 positioned on a transverse side 37 of the support member 31. The grooves may be positioned on opposite transverse sides 37, 37' of the support member 31, where the groove extends along the length of the support member 31. The grooves have a first upper edge 83, and a second upper edge 83' on opposing transverse sides 37,37', where the first width E of the second elongated part 45 may be seen as the distance from the first upper edge 83 towards the second upper edge 83' in a transverse direction. The second elongated part may have a thickness G which extends in a direction parallel to the radial axis C. Furthermore, the support member 31 is provided with a first locking member 57 having an outer surface 59, which is in the form of a protrusion that may have a predefined shape. In this example, the outer surface has a conical shape, terminating at the tip part 61 of the second locking member 57.

The load member 1 comprises a load member body 3, where the load member body comprises a gripping member 13, a first connecting member 9 and a second connecting member 11, where the first and the second connecting members face a primary surface 5 of the load member body 3. The primary surface 5 comprises a second locking member 7, which is in the form of a depression having an inner wall 29, where the shape of the inner wall 29 matches the shape of the outer surface 59 of the first locking member 57, so that the first locking member 57 can penetrate the inner volume 85 of the second locking member 7 and mate with the second locking member 7.

The first connecting member 9 and the second connecting member 11 extend from the load member body 3 and terminate in first connector end part 19 and a second connector end part 21, respectively. The first connector end part 19 and the second connector end parts 21 are oriented towards each other, as well as the second longitudinal axis B, and terminate in opposing tip parts 27, where the width F between the tip parts 27 may be seen as the distance between the tip parts 27 in a transverse direction. The first connector part 9 and the second connector part 11 have an inner surface 87, which faces the primary surface 5 of the load member body 3. The distance between the inner surface 87 and the primary surface may be seen as height H.

The first width E of the second elongated part 45 may be greater than the second width F between the tips 27 of the first connector end part 19 and the second connector end part 21, so that when the first connector end part and the second connector end part are positioned inside the first groove 81 and the second groove 81', respectively, the load member 1 cannot be moved in a radial direction away from the support member, thereby fixing the load member 1 relative to the support member 31. The primary surface 5 will abut the second surface 41, where the first locking part 57 enters the second locking part 7, thereby ensuring that the load member 1 cannot move relative to the support member 31 in a longitudinal direction along the first longitudinal axis and/or the second longitudinal axis. To ensure that the load member is maintained in tight connection in a radial direction, the height H of may be equal to or smaller than the thickness G of the second elongated member. Thus, the first upper edge 83 and the second upper edges 83 are squeezed between the inner surface 87 and the primary surface 7, thereby maintaining the position of the load member 1 in a radial direction, relative to the support member 31. This position may be seen in e.g. Fig. 7 C.

Fig. 7A is a cross-sectional view taken across the longitudinal axis A or B and shows a support member 31 connected to an inner surface 71 of a rim 69. The load member 1 may be positioned above the support member 31 in a radial direction C to prepare to attach the load member 1 to the support member 31.

Fig. 7B shows an intermediate position of the load member 1 relative to the support member 31, during an attachment phase, where the first connecting member 9 has been introduced into the groove 81 on one transverse side by rotation of the load member 1 at a pivot point which is parallel to the second longitudinal axis B. The first connecting member 9 enters the groove 81 and may be pulled in a transverse direction towards the longitudinal axis A of the support member 31, bringing the tip 27 into contact with the joining 79. Subsequently, the user may apply a force onto the gripping part 13 in a direction shown by arrow X, which will cause the second connecting member 11 to snap over the second upper edge 83', as well as causing the first locking member 57 to enter the second locking member 7 and snap into its fixed position as seen in Fig. 7C.

Thus, when the load member 1 is in the position shown in Fig. 7C, the first connecting member 9 and the second connecting member 11 provide a downwards pull of the primary surface 7 towards the second surface, thereby ensuring the first locking member 57 is engaged with the second locking member 7, and the load member 1 is securely fixed relative to the support member.

Furthermore, as the balancing weight assembly is to be used on a wheel, it can also be assumed that the centrifugal force applied by the rotation of the wheel will assist the primary surface 7 to be forced towards the secondary surface, as the centrifugal force travels in a direction parallel to the radial axis C and extending in a direction from the load member 1 towards the support member.

The use of the terms "first", "second", "third" and "fourth", "primary", "secondary", "tertiary" etc. does not imply any particular order but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering.

Furthermore, the labelling of a first element does not imply the presence of a second element and vice versa.

It is to be noted that the word "comprising" does not necessarily exclude the presence of other elements or steps than those listed.

It is to be noted that the words "a" or "an" preceding an element do not exclude the presence of a plurality of such elements.

It should further be noted that any reference signs do not limit the scope of the claims.

Although features have been shown and described, it will be understood that they are not intended to limit the claimed invention, and it will be made obvious to those skilled in the art that various changes and modifications may be made without departing from the spirit and scope of the claimed invention. The specification and drawings are, accordingly, to be regarded in an illustrative rather than restrictive sense. The claimed invention is intended to cover all alternatives, modifications, and equivalents.

### List of references

- 1: Load member
- 3: Load member body
- 5: Primary surface
- 7: Second locking member
- 9: First connecting member
- 11: Second connecting member
- 13: Gripping member
- 15: First end part
- 17: Second end part
- 19: First connector end part
- 21: Second connector end part
- 23: Depression
- 25: Weakening on inner side
- 27: Tip part of connector end parts
- 29: Inner wall of second locking member
- 31: Support member
- 33: Gripping end part
- 35: Opposed end of gripping member
- 37: Transverse side
- 37': Opposite transverse side
- 39: First surface
- 41: Second surface
- 43: First elongated part
- 45: Second elongated part
- 47: Intermediate portion
- 49: First transverse side
- 51: Second transverse side
- 53: First groove
- 55: Second groove
- 57: Second locking member
- 59: Outer wall of second locking member
- 61: Base part of second locking member
- 63: Tip part of second locking member
- 65: Wheel
- 67: Tire
- 69: Rim
- 71: Inner surface of rim
- 73: Central part of support member
- 75: First groove surface
- 77: Second groove surface
- 79: Joining
- 81: Groove
- 81': Opposite groove
- 83: First upper edge
- 83': Second upper edge
- 85: Inner volume of second locking member
- 87: Inner surface of Connecting part
- A: First longitudinal axis
- B: Second longitudinal axis
- C: Radial axis
- D: Transverse axis
- E: First width
- F: Second width
- G: Thickness of second elongated member
- H: Height of space of load member
- X: Direction

## Claims

1. A balancing assembly for wheels, comprising
- a support member extending in a direction having a first longitudinal axis and a height extending along a first radial axis, the support member comprising
∘ a first surface being configured to be attached to a surface area of a rim of a wheel,
∘ a second surface,
∘ an intermediate portion extending in a direction parallel to the radial axis, and extending from the first surface to the second surface, and
∘ a first locking member,
- a load member body extending in a direction having a second longitudinal axis, the load member comprising
∘ a primary surface,
∘ a first connecting part positioned on a first side of the second longitudinal axis, a second connecting part positioned on a second side of the second longitudinal axis, where the first and the second connecting part are configured to engage with the intermediate portion of the support member securing the load member in a radial direction, and
∘ a second locking member, configured to engage with the first locking member, to secure the load member relative to the support member in a longitudinal direction.

2. A balancing assembly for wheels in accordance with claim 1, wherein the first locking member comprises a first physical structure, and where the second locking member comprises a second physical structure, where the first physical structure cooperates with the second physical structure.

3. A balancing assembly for wheels in accordance with any of the preceding claims, wherein the first locking member comprises a first projection, and where the second locking member comprises a first depression, where the first projection cooperates with the first depression, or wherein the first locking member comprises a first depression, and where the second locking member comprises a first projection, where the first projection cooperates with the first depression.

4. A balancing assembly for wheels in accordance with any of the preceding claims, wherein the first locking member is positioned on the second surface of the support member, and the second locking member is positioned on the primary surface of the load member.

5. A balancing assembly for wheels in accordance with any of the preceding claims, wherein the support member comprises a plurality of first locking members, and the load member comprises a plurality of second locking members, where the plurality of first locking members are configured to mate with the plurality of second locking members.

6. A balancing assembly for wheels in accordance with any of the preceding claims, wherein the width of the load member is larger than the width of the support member in a direction along a transverse axis, or wherein the width of the support member is larger than the width of the load member in a direction along a transverse axis.

7. A balancing assembly for wheels in accordance with any of the preceding claims, wherein the intermediate portion comprises a first groove positioned on one side of the first longitudinal axis and a second groove positioned on an opposite side of the first longitudinal axis.

8. A balancing assembly for wheels in accordance with any of the preceding claims, wherein the load member body comprises a gripping member extending in a direction away from the load member body allowing a gripping force to be applied to the load member body for attachment and/or release of the load member body relative to the support member.

9. A balancing assembly for wheels in accordance with any of the preceding claims, wherein the load member body and/or the support member body is/are configured to resiliently flex in a direction a transverse direction.

10. A balancing assembly for wheels in accordance with any of the preceding claims, wherein the first connecting member and/or the second connecting members is/are provided with a flange portion configured to interact with a mating groove portion on the intermediate portion of the support member.

11. A balancing assembly for wheels in accordance with any of the preceding claims, wherein second surface of the support member faces away from the surface area of the rim, and where the primary surface of the load member is configured to face the second surface.

12. A balancing assembly for wheels in accordance with any of the preceding claims, wherein the first locking member is positioned on the second surface of the support member, and the second locking member is positioned on the primary surface of the load member.

13. A balancing assembly for wheels in accordance with any of the preceding claims, wherein the support member is configured to extend along the full circumference of the rim.

14. A balancing assembly for wheels in accordance with any of the preceding claims, wherein the first connecting part and/or the second connecting part are configured to provide a force in a radial direction and providing an engagement force in the radial direction between the first locking member and the second locking member.

15. A balancing assembly for wheels in accordance with any of the preceding claims, wherein the first locking member and the second locking member have a stationary physical shape.

16. A balancing assembly for wheels in accordance with any of the preceding claims, wherein a plurality of first locking members are distributed along the first longitudinal axis in a first pattern, where the plurality of second locking members are distributed along the second longitudinal axis in a second pattern, where the second pattern matches the first pattern.
